# EUROPEAN PATENT SPECIFICATION

(11) **EP 0 710 681 B1**
(45) Date of publication and mention of the grant of the patent: **07.05.2003**
(21) Application number: 95117422.6
(22) Date of filing: 06.11.1995
(51) Int. Cl.: C08F 297/04

(54) **Block copolymers interpolymerized with in situ polystyrene**
Mit Polystyrol "in-situ" interpolymerisierte Blockcopolymere
Copolymères blocs interpolymérisés avec du polystyrène "in situ"

(30) Priority: 07.11.1994 US 334989
(43) Date of publication of application: 08.05.1996
(73) Proprietor: Firestone Polymers, LLC, Akron, Ohio 44301 (US)
(72) Inventor: Wollum, Mark H., Norton, Ohio 44203 (US); Graves, Daniel F., Canal Fulton, OH 44614-9377 (US)
(74) Representative: Kraus, Walter, Dr.

(56) References cited:
- FR-A- 2 285 433
- CHEMICAL ABSTRACTS, vol. 87, no. 6, August 1977 Columbus, Ohio, US; abstract no. 40216c, page 28; column 2; & JP-A-52 047 082 (ASAHI CHEM. IND. CO., LTD)
- CHEMICAL ABSTRACTS, vol. 88, no. 14, April 1978 Columbus, Ohio, US; abstract no. 90446u, page 28; column 2; & JP-A-52 112 691 (ASAHI CHEM. IND., LTD)

## Description

### FIELD OF THE INVENTION

This invention relates generally to processes for incorporating polystyrene in block copolymers and to the compositions produced thereby.

### BACKGROUND OF THE INVENTION

Polystyrene is a well-known thermoplastic material finding a wide variety of uses. It is often added to polymers including block copolymers to increase the mold flow characteristic of the polymer, thus preventing the polymer from sticking to the injection molder cavity. Heretofore, polystyrene has been blended with block copolymers to increase the processability of the block copolymer. United States Patent No. 4,308,358 discloses a process for making high impact polystyrene comprising mixing, at an elevated temperature, an AB block copolymer and a styrene polymer. This blending process creates disadvantageous properties in the blend, namely the impact strength of the block copolymer is severely reduced upon the addition of as low as 1.5% by weight of crystal polystyrene to the block copolymer. While not wishing to be bound by any particular theory, Applicants believe that the lower impact strength resulting from the blending of polystyrene and block copolymer is due to the different molecular weights and physical properties of the components thereby causing phase separation to occur in the resulting product. The poor interphase adhesion characteristic of highly incompatible blends usually results in very poor mechanical properties, e.g., tensile strength, elongation and impact strength.

It is therefore an object of the present invention to provide a process for producing an interpolymer of polystyrene and a block copolymer exhibiting good mechanical properties. It is a further object of this invention to provide polystyrene and block copolymer products exhibiting high impact strength.

### SUMMARY OF THE INVENTION

A process for interpolymerizing a blend of a vinyl aromatic hydrocarbon polymer and copolymer product is disclosed. The process includes the following steps:
(a) forming a block polymer precursor in the presence of an anionic initiator and a hydrocarbon diluent in a reaction zone, wherein said block polymer precursor has a living end and wherein the structure of the block polymer precursor is represented by the following formula:

   S-B-

   wherein S is a polymer block primarily containing vinyl aromatic hydrocarbon monomer contributed units and B is a polymer block primarily containing conjugated diene monomer contributed units;
(b) adding to said block polymer precursor a vinyl aromatic hydrocarbon monomer and an additional amount of anionic initiator, to simultaneously form an interpolymer consisting of: (1) a block polymer comprising a poly(vinyl aromatic hydrocarbon) terminal block attached to the living end of said block polymer precursor, and (2) a poly(vinyl aromatic hydrocarbon) having a living end; and
(c) inactivating the living ends and recovering the interpolymer.

The practice of this process produces a vinyl aromatic hydrocarbon block terminated block polymer, such as SBS, interpolymerized with a polymer formed from vinyl aromatic hydrocarbon monomer contributed units, such as polystyrene.

### BRIEF DESCRIPTION OF THE FIGURES

Figure 1 illustrates the relationship between the Gardner Impact Strength of interpolymers containing polystyrene and a block polymer as prepared in Example 1 and the percent by weight of in situ polystyrene formed from the total styrene monomer charge used to prepare the terminal polystyrene block and in situ polystyrene during formation of the interpolymer. The interpolymers represented in this figure were produced using the in situ process of the present invention.
Figure 2 illustrates the relationship between the Gardner Impact Strength of a block polymer/polystyrene blend and the amount by weight of crystal polystyrene added to the polymer as shown in Comparative Example A.
Figure 3 illustrates the relationship between the Gardner Impact Strength of a block polymer/polystyrene blend and the amount by weight of crystal polystyrene added to the polymer as shown in Comparative Example B.

### DETAILED DESCRIPTION OF THE PREFERRED EMBODIMENTS

The process of the present invention prepares an interpolymer of (1) a block polymer having a precursor polymer block attached to a terminal block of a poly(vinyl aromatic hydrocarbon) and (2) a poly(vinyl aromatic hydrocarbon). The precursor polymer block of the block polymer preferably contains diene monomer contributed block units, and optionally contains vinyl aromatic monomer (VAM) contributed units including random blocks of butadiene and styrene (B/S).

The block polymers to be interpolymerized in accordance with the present invention preferably contain conjugated diene monomers and vinyl substituted aromatic hydrocarbons contributed units. Polymerizable 1,3-diene monomers that can be employed in the production of the copolymers of the present invention are one or more 1,3-conjugated dienes containing from four to twelve, inclusive, carbon atoms per molecule. Exemplary monomers include 1,3-butadiene; isoprene; 2,3-dimethyl-1,3-butadiene; 1,3-pentadiene (piperylene); 2-methyl-3-ethyl-1,3-butadiene; 3-methyl-1,3-pentadiene; 1,3-hexadiene; 2-methyl-1,3-hexadiene; 3-butyl-1,3-octadiene; and the like. Among the dialkyl-1,3-butadienes, it is preferred that the alkyl groups contain from one to three carbon atoms. The preferred 1,3-diene monomer for use in the process of the present invention is 1,3-butadiene.

Exemplary vinyl substituted aromatic hydrocarbon monomers, commonly referred to as vinyl aromatic hydrocarbon monomers or VAM, for use in either the preparation the block polymer precursor and/or the terminal block and the poly(vinyl aromatic hydrocarbon), include: styrene, alpha-methylstyrene; 1-vinylnaphthalene; 2-vinyl-naphthalene; 1-alphamethylvinylnaphthalene; 2-alphamethyl-vinylnaphthalene; and mixtures of these as well as alkyl, cycloalkyl, aryl, alkaryl and aralkyl derivatives thereof in which the total number of carbon atoms in the combined hydrocarbon is generally not greater than 12. Examples of these latter compounds include: 4-methylstyrene; vinyl toluene; 3,5-diethylstyrene; 2-ethyl-4-benzylstyrene; 4-phenylstyrene; 4-para-tolylstyrene; and 4,5-dimethyl-1-vinylnaphthalene. Occasionally, di- and tri- vinyl aromatic hydrocarbons are used in small amounts in addition with mono-vinyl aromatic hydrocarbons. The preferred vinyl aromatic hydrocarbon is styrene.

The total amount of vinyl aromatic hydrocarbon monomer in the final monomer charge used to prepare both the terminal vinyl aromatic block and the interpolymerized poly(vinyl aromatic hydrocarbon) is an amount of from 6.3 to 70.2% by weight, preferably from 28.3 to 61.7% by weight, more preferably from 50.6 to 57.6% by weight, based on the total weight of the block polymer. The weight percent of interpolymerized vinyl aromatic hydrocarbon polymer of the total amount of both of the terminal poly(vinyl aromatic hydrocarbon) block and vinyl aromatic hydrocarbon polymer is in the range of from 5 to 35% by weight, preferably from 9 to 26% by weight, more preferably from 10 to 20% by weight These weight percentages reflect the percentage of monomer, such as styrene, of the final monomer charge that is polymerized due to the additional charge of anionic initiator to the reaction zone. The final monomer charge is used to prepare both the terminal block added onto the block polymer precursor and the interpolymerized poly(vinyl aromatic monomer).

The block polymers produced according to the instant invention must terminate in a vinyl aromatic hydrocarbon block. The block polymer precursors useful in the present invention is S-B-, wherein S is a polymer block primarily containing vinyl aromatic hydrocarbon monomer contributed units, B is a polymer block primarily containing conjugated diene monomer contributed units, and n is an integer of one or more. The rubbery diene portion of the polymer may contain some copolymer vinyl aromatic hydrocarbon in order to adjust the glass transition temperature (T_{g}) or the solubility parameter. The block polymers produced in accordance with the present invention are represented by the above-discussed block polymer precursor structure additionally containing a terminal block formed from vinyl aromatic hydrocarbon contributed units.

The process according to the present invention is performed in the following manner. First, any desirable block polymer precursor is prepared in a reactor or reaction zone by polymerizing suitable monomers, particularly diene monomers and/or vinyl aromatic monomers, to form one or more blocks in a suitable diluent in the presence of an anionic initiator. The resulting block polymer precursor is "living", because a catalytically active anion is present at the terminal end of the block polymer precursor. The anion is capable of initiating polymerization of further monomers in the reaction zone.

After formation of the block polymer precursor, charges of additional anionic initiator and vinyl aromatic hydrocarbon monomer are simultaneously or sequentially added to the reaction zone containing the "living" block polymer precursor. A portion of the vinyl aromatic hydrocarbon monomer charge attaches to the "living" block polymer precursor. The additional charge of anionic initiator initiates polymerization of an equimolar amount the additionally charged vinyl aromatic hydrocarbon monomer thereby creating "living" vinyl aromatic hydrocarbon polymers. Thus, the additional anionic initiator is added to create competition for the additional charge of vinyl aromatic hydrocarbon monomer resulting in the simultaneous production of (1) a terminal block of vinyl aromatic hydrocarbon monomer contributed units attaching to the "living" block polymer precursor and (2) poly(vinyl aromatic hydrocarbon) having a living end. The resulting interpolymer is an interpolymerized blend of a block polymer and a poly(vinyl aromatic hydrocarbon) having living ends.

The reaction mixture is then treated to inactivate the living ends and recover the interpolymer product. While it is to be understood that any suitable treating method can be employed, one method for accomplishing the desired treatment comprises adding a catalyst-inactivating material. Exemplary catalyst-inactivating materials include water, alcohol, an organic acid, an inorganic acid, or the like. It is generally preferred to add only an amount of the catalyst-inactivating material sufficient to deactivate the catalyst without causing precipitation of the dissolved polymer. It has also been found to be advantageous to add an antioxidant to the polymer solution prior to isolation of the polymer. After the addition of the catalyst-inactivating material and the antioxidant, the polymer present in the solution can then be precipitated by the addition of an excess of the catalyst-inactivating material or isolated by flashing the solvent. Deactivation of the catalyst and precipitation of the polymer can be accomplished in a single step. The precipitated polymer can then be recovered by filtration, decantation, or the like. In order to purify the polymer, the separated polymer can be redissolved in a solvent, such as those suitable for the polymerization, and again precipitated by the addition of an alcohol. Thereafter, the polymer is again recovered by a suitable separation means, as indicated hereinbefore, and dried. The solvent and alcohol can be separated, for example, by fractional distillation, and recycled. The antioxidant can be added to the reaction mixture prior to precipitation of the polymer, to the solution of redissolved polymer, or to the solvent in which the polymer is to be subsequently redissolved. Polymerization can be carried out at any convenient temperature employed in the polymerization arts. Exemplary temperatures lie in the range of from less than about 0° to 200°C, or more, preferably polymerization temperatures range from about 40° to 100°C, for each step. The pressures employed can be convenient, and preferably are pressures sufficient to maintain monomers and diluents substantially in the liquid phase. The polymerization times can vary widely as may be convenient, and will, of course, be affected by polymerization temperatures chosen. The times should be chosen, for each step, such that substantially complete polymerization is obtained.

Any anionic initiator that is known in the art as useful in the copolymerization of diene monomers with vinyl aromatic hydrocarbons can be employed in the process of the instant invention. Exemplary organo-lithium catalysts include lithium compounds having the formula R(Li)ₓ, wherein R represents a hydrocarbyl radical of 1 to 20, preferably 2 to 8, carbon atoms per R group and x is 1. Typical R groups include aliphatic radicals and cycloaliphatic radicals, such as alkyl, cycloalkyl, cycloalkylalkyl, alkylcycloalkyl, aryl and alkylaryl radicals. Specific examples of R groups for substitution in the above formulas include primary, secondary and tertiary groups such as methyl, ethyl, n-propyl, isopropyl, n-butyl, isobutyl, t-butyl, n-amyl, isoamyl, n-hexyl, n-octyl, n-decyl, cyclopentyl-methyl, cyclohexyl-ethyl, cyclopentyl-ethyl, methylcyclopentylethyl, cyclopentyl, dimethylcyclopentyl, ethylcyclopentyl, methylcyclohexyl, dimethylcyclohexyl, ethylcyclohexyl, isopropylcyclohexyl, and the like.

Specific example of other suitable lithium catalysts include: p-tolyllithium, 4-phenylbutyl-lithium, 4-butylcyclohexyllithium, 4-cyclohexylbutyl-lithium, lithium dialkyl amines, lithium dialkyl phosphines, lithium alkyl aryl phosphine, lithium diaryl phosphines and the like.

The preferred catalyst for use in the present invention is n-butyllithium and sec-butyllithium.

In accordance with the process of the present invention, two separate charges of anionic initiator must be made into the reaction zone. The first charge of anionic initiator is used to initiate polymerization of the monomer charges used to prepare the block polymer precursor of the present invention. The second charge of anionic initiator is added to the reaction zone containing the formed block polymer precursor in solution prior to or simultaneously with the final charge of vinyl aromatic monomer used to simultaneously prepare the terminal block onto the block polymer precursor and the interpolymerized poly(vinyl aromatic hydrocarbon). The amounts of anionic initiator employed in both: (1) the preparation of the block polymer precursor and (2) the preparation of the terminal block and interpolymerized poly(vinyl aromatic hydrocarbon) can vary over a broad range. In general, the first charge or amount of initiator used to initiate polymerization of the block polymer precursor will be in the range of from 0.1 to 5 milliequivalents of initiator per 100 parts by weight of total amount of monomer charged into the reaction zone and will preferably be in the range of from 0.4 to 2 milliequivalents of initiator per 100 parts by weight of total monomer charged. Likewise, the amount of additional anionic initiator used to initiate polymerization of a portion of the final vinyl aromatic hydrocarbon monomer charge will be in the range of from 0.01 to 30 milliequivalents of initiator per 100 parts by weight of the monomers charged and will preferably be in the range of from 0.05 to 7.6 milliequivalents of initiator per 100 parts by weight of the monomer charged into the reaction zone. Variance of the amount of the second charge of the anionic initiator is used to control the amount of poly(vinyl aromatic hydrocarbon) interpolymerized with the block polymer.

A 1,2-microstructure controlling agent or randomizing modifier can be used during formation of the polymer blocks to control the 1,2-microstructure in the diene contributed units and to randomize the amount of vinyl aromatic monomers, such as styrene, incorporated with the diene monomer, such as butadiene, in the rubbery phase. Suitable modifiers include, but are not limited to, tetramethylenediamine (TMEDA), oligomeric oxolanyl propanes (OOPS), 2,2-bis-(4-methyl dioxane) (BMD), tetrahydrofuran (THF), bistetrahydrofuryl propane and the like. One or more randomizing, modifiers can be used. The amount of the modifier to the weight of the monomers in the reactor can vary from a minimum as low as 0 to a maximum as great as 400 millimoles, preferably 0.01 to 300.0 millimoles, of modifier per hundred grams of monomer currently charged into the reactor. As the modifier charge increases, the percentage of 1,2-microstructure increases in the diene monomer contributed units. A polar organic compound such as ether, polyether, tertiary amine, polyamine, thioether and hexamethylphosphortriamide may be used to control the vinyl linkage content in the conjugated diene component. The vinyl linkage content can be controlled by the amount added of the polar organic compound, and by the polymerization temperature.

Modifiers such as tetramethyl THF can be used to increase initiation of the first polystyrene block without effecting microstructure of the rubber block if low levels are used.

The process of this invention is carried out in the presence of a hydrocarbon diluent. Aliphatic, aromatic hydrocarbons, paraffins, and cycloparaffins may be employed. The preferred hydrocarbons are those containing from 3 to 12, inclusive, carbon atoms, particularly n-hexane. Examples of diluents include propane, isobutene, n-pentane, isooctane, n-dodecane, cyclopentane, cyclohexane, methylcyclohexane, benzene, toluene, xylene, and the like. Mixtures of two or more of these hydrocarbons may also be used.

The polymerization process may be conducted under batch or semi-batch conditions.

The polymers of this invention may be compounded further with other polymers, oils, fillers, reinforcements, antioxidants, stabilizers, fire retardants, tackifiers, vulcanization accelerators, vulcanizing agents, processing aids, antiblocking agents and other rubber plastic compounding ingredients. These compounding ingredients are incorporated in suitable amounts depending upon the contemplated use of the product.

A reinforcement may be defined as the material that is added to a resinous matrix to improve the strength of the polymer. Most of these reinforcing materials are inorganic or organic products of high molecular weight. Various examples include glass fibers, asbestos, boron fibers, carbon and graphite fibers, whiskers, quartz and silica fibers, ceramic fibers, metal fibers, natural organic fibers, and synthetic organic fibers.

The interpolymers of the instant invention can be used as is or can be incorporated into injection molding resins or in any other compositions typically containing high impact polymers. Particularly, the interpolymers of the present invention have improved processability over prior art blends of polystyrene and block polymers. Typically, the interpolymers produced according to the process of the present invention possess a Gardner Impact Strength of at least 50, preferably at least 100, more preferably at least 150, and most preferably at least 200.

The following examples are presented for purposes of illustration only. All percentages are by weight unless otherwise specified.

### EXAMPLE 1

An interpolymer was produced according to the present invention. The structural characteristics of the triblock polymer produced by anionic polymerization are displayed in Table 1. The first block of this triblock polymer was prepared by charging a stirred reactor with (1) 18.2 lbs.¹⁾ of a 33% by weight charge of styrene in hexane, (2) 10.9 lbs. of hexane, (3) 0.69 kg of a 3% solution of n-butyllithium in hexane together with 1.634 grams of modifier, 10.0 kg of a 15% solution of a styrene/butadiene diblock dispersant. This mixture was heated at 48.9°C (120°F)for 30 minutes and then cooled to 43.3°C (110°F)to produce a first block as displayed in Table 1. A charge of 40.0 lbs. of a 33% by weight solution of 1,3-butadiene in hexane was added to the reactor as the temperature of the reactor was raised to 76,7°C (170°F)and heated until 30 minutes after peak temperature. The composition of the second block is disclosed in Table 1. The reactor was then additionally charged with 0.07 kg of a 3% solution of n-butyllithium in hexane followed by a charge of 134.8 lbs. of a 33% solution of styrene in hexane. The contents of the reactor was heated to 76,7°C (170°F)for thirty minutes after reaching the peak temperature. The reaction was terminated by adding 272.4 grams of a 3% aqueous solution of boric acid, and a 5.55 lbs of a hexane solution containing antioxidant was added. The molecular weight of the third block of the triblock polymer as displayed in Table 1 was 56,470. The molecular weight of the polystyrene produced in situ was also 56,470.
¹⁾ 1 lb = 0,4536 kg

### EXAMPLE 2

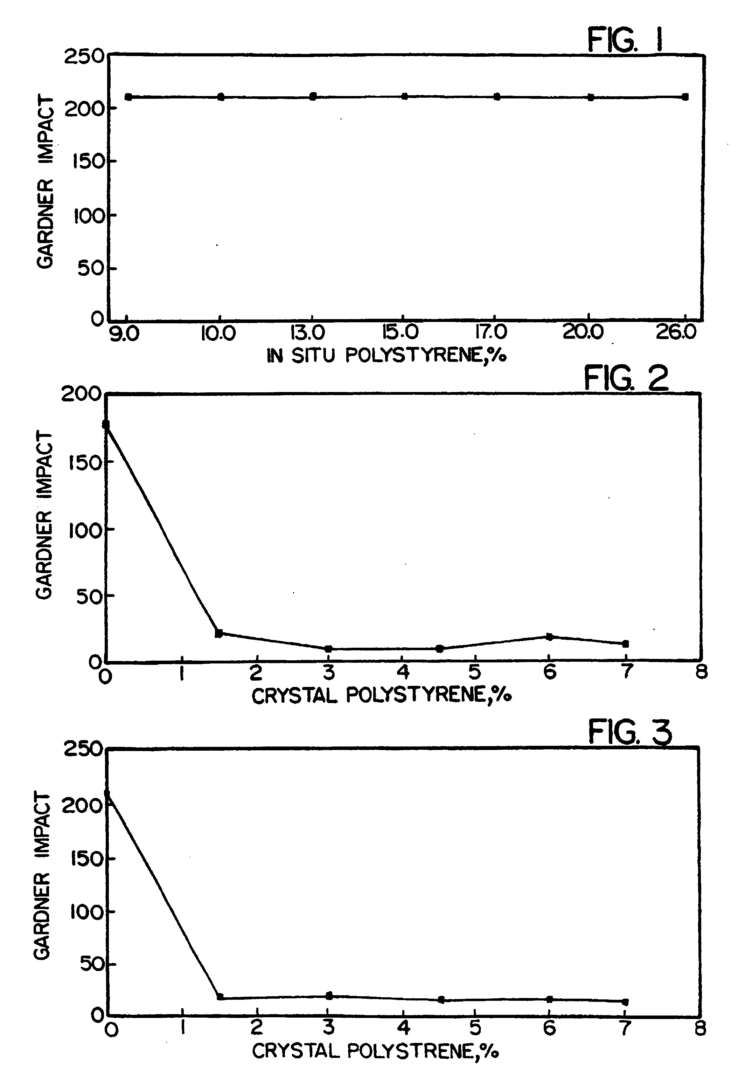

An interpolymer was produced according to the procedure of Example 1. The first block of this triblock polymer was prepared by charging a reactor with (1) 25.8 lbs. of a 33% by weight charge of styrene in hexane, (2) 33.6 lbs. of hexane, (3) 0.81 kg of a 3% solution of n-butyllithium in hexane together with 10 grams of modifier, 14.1 kg of a styrene/butadiene diblock dispersant. This mixture was heated at 48,9°C (120°F)for 30 minutes and then cooled to 37.8°C (100°F)to produce a first block as displayed in Table 1. Separate charges of 56.7 lbs. of a 33% by weight solutions of 1,3-butadiene in hexane and styrene in hexane were added to the reactor as the temperature of the reactor was raised to 76.7°C (170°F)and heated until 30 minutes after peak temperature. The reactor was then additionally charged with 0.16 kg of a 3% solution of n-butyllithium in hexane (20% of the initial catalyst charge) followed by a charge of 142.2 lbs. of a 33% solution of styrene in hexane. The contents of the reactor was heated to 76,7°C (170°F)for thirty minutes after reaching the peak temperature. The reaction was terminated by adding 11.57 grams of boric acid and 374 grams of water, followed by the addition of a 6.80 lbs. of a hexane solution containing antioxidant. As can be easily recognized from the results displayed in Fig. 1, all interpolymers produced according to the process of the present invention possess measured Gardner Impact Strengths exceeding 200. The amount of crystal polystyrene incorporated in the interpolymer varied in amount ranging from 9.0% to 26.0%, by weight of the final styrene monomer charge. The amount of in situ polystyrene present in the interpolymer did not adversely affect the Gardner Impact Strength of the interpolymer, nor did the interpolymer stick in the injection molder cavity.

**TABLE 1**

| Physical Characteristics of the Triblock Polymer Produced According to the Instant Invention | | | | | | | | |
|---|---|---|---|---|---|---|---|---|
| Example No. | First Block | | Second Block | | Third Block | | Total MW | Total % STY |
| | MW¹ | % STY² | MW | % STY | MW | % STY | | |
| 1 | 8,420 | 100 | 18,530 | 0 | 56,470 | 100 | 83,420 | 77.8 |
| 2 | 10,160 | 100 | 44,690 | 50 | 46,720 | 100 | 101,570 | 78.0 |

| | | | | | | | | |
|---|---|---|---|---|---|---|---|---|
| ¹Molecular Weight | | | | | | | | |
| ²Percent Styrene Remainder Butadiene | | | | | | | | |

### COMPARATIVE EXAMPLE A

A triblock polymer was prepared by anionic polymerization techniques having the structural characteristics displayed in Table 2. The triblock polymer exhibited a Gardner Impact of about 175, but the polymer adhered to the injection molder cavity. Crystal polystyrene was physically blended with the triblock polymer in amounts ranging from 1.5% to 7.0% by weight in order to improve the mold flow characteristics of the block polymer. The Gardner Impact Strength of the block polymer after the addition by blending of the crystal polystyrene was measured. The Gardner Impact Strength of the blend of triblock polymer of Table 2 and the crystalline polystyrene versus the percent by weight of crystalline polystyrene added to the triblock polymer is depicted in Figure 2. The Gardner Impact Strength of the polymer blend was less than 25 upon the addition by blending of 1.5% by weight or more of the crystal polystyrene.

**TABLE 2**

| Physical Characteristics of Block Polymer Utilized in Comparative Example A | | | | | | | |
|---|---|---|---|---|---|---|---|
| First Block | | Second Block | | Third Block | | Total MW | Total % STY |
| MW¹ | % STY² | MW | % STY | MW | % STY | | |
| 8,980 | 99 | 37,330 | 47.6 | 42,670 | 100 | 88,980 | 77.9 |

| | | | | | | | |
|---|---|---|---|---|---|---|---|
| ¹Molecular Weight | | | | | | | |
| ²Percent Styrene Remainder Butadiene | | | | | | | |

### COMPARATIVE EXAMPLE B

A triblock polymer was prepared by anionic polymerization techniques having the structural characteristics displayed in Table 3. The block polymer exhibited a Gardner Impact of about 200, but the polymer adhered to the injection molder cavity. Crystal polystyrene was physically blended with the block polymer in amounts ranging from 1.5% to 7.0% by weight in order to improve the mold flow characteristics of the triblock polymer. The Gardner Impact Strength of the triblock polymer decreased dramatically upon the addition by blending of 1.5% by weight or more of crystal polystyrene. The Gardner Impact Strengths of the polymer blends of Comparative Example B were about 20 and are displayed in Figure 3. The addition of polystyrene to the triblock polymer resulted in a loss of approximately 90% of the Gardner Impact Strength of the original triblock polymer.

**TABLE 3**

| Physical Characteristics of Block Polymer Utilized in Comparative Example B | | | | | | | |
|---|---|---|---|---|---|---|---|
| First Block | | Second Block | | Third Block | | Total MW | Total % STY |
| MW¹ | % STY² | MW | % STY | MW | % STY | | |
| 8,620 | 99 | 37,540 | 50 | 39,250 | 100 | 85,410 | 77.9 |

| | | | | | | | |
|---|---|---|---|---|---|---|---|
| ¹Molecular Weight | | | | | | | |
| ²Percent Styrene Remainder Butadiene | | | | | | | |

## Claims

1. A process for producing an interpolymer comprising:
(a) forming a block polymer precursor in the presence of an anionic initiator and a hydrocarbon diluent in a reaction zone, wherein said block polymer precursor has a living end and wherein the structure of the block polymer precursor is represented by the following formula:
S-B-
wherein S is a polymer block primarily containing vinyl aromatic hydrocarbon monomer contributed units and B is a polymer block primarily containing conjugated diene monomer contributed units;
(b) adding to said block polymer precursor a vinyl aromatic hydrocarbon monomer and an additional amount of anionic initiator, to simultaneously form an interpolymer consisting of: (1) a block polymer comprising a poly(vinyl aromatic hydrocarbon) terminal block attached to the living end of said block polymer precursor, and (2) a poly(vinyl aromatic hydrocarbon) having a living end; and
(c) inactivating the living ends and recovering the interpolymer.

2. The process according to claim 1 wherein said vinyl aromatic hydrocarbon monomer is styrene.

3. The process according to claim 1 wherein said conjugated diene monomer is 1,3-butadiene.

4. The process according to claim 1 wherein the vinyl aromatic hydrocarbon monomer used for forming the first polymer block of said block polymer precursor in step (a) is styrene arid the process is carried out in the presence of a styrene/butadiene diblock dispersant.

5. The process according to claim 1 wherein said anionic initiator is an organo-lithium compound.

6. The process according to claim 5 wherein the organo-lithium compound is n-butyllithium or sec-butyllithium.

7. The process according to claim 1 wherein the amount of anionic initiator added in step (a) is from 0.1 to 5 milliequivalents of initiator per 100 parts by weight of the monomers.

8. The process according to claim 1 wherein the additional amount of initiator added in step (b) is from 0.01 to 30 milliequivalents of initiator per 100 parts by weight of the monomers.

9. The process according to claim 1 wherein the amount of vinyl aromatic hydrocarbon monomer added in step (b) is from 6.3 to 70.2% based on the total weight of the block polymer formed.

10. The process according to claim 1 wherein the step (c) of terminating the living ends comprises adding a catalyst-inactivating material.

11. The process according to claim 10 wherein the catalyst-inactivating material is selected from the group consisting of water, alcohol, an organic acid and an inorganic acid.

12. An interpolymer obtainable by the process according to claim 1, consisting of:
(a) a block polymer consisting of:
(i) a first polymer block primarily containing vinyl aromatic hydrocarbon monomer contributed units,
(ii) a second polymer block primarily containing conjugated diene monomer contributed units,
(iii) a terminal polymer block comprising vinyl aromatic hydrocarbon monomer contributed units;
(b) a vinyl aromatic hydrocarbon polymer formed from vinyl aromatic hydrocarbon monomer contributed units,
wherein said vinyl aromatic hydrocarbon polymer (b) is simultaneously produced during the formation of the terminal polymer block (iii) of the block polymer (a).

13. The interpolymer according to claim 12 wherein said vinyl aromatic hydrocarbon monomer contributed units are styrene.

14. The interpolymer according to claim 12 wherein said block polymer (a) is a styrene-butadiene-styrene block polymer.

15. The interpolymer according to claim 12 wherein the block polymer (a) is a polystyrene block terminated block polymer.

16. The interpolymer according to claim 12 wherein the vinyl aromatic hydrocarbon polymer (b) comprises 5 to 35 percent by weight of the total combined weight of the terminal polymer block (iii) of the block polymer (a) and the vinyl aromatic hydrocarbon polymer (b).

17. The interpolymer according to claim 12 wherein the vinyl aromatic hydrocarbon polymer (b) comprises 9 to 26 percent by weight of the total combined weight of the terminal polymer block (iii) of the block polymer (a) and the vinyl aromatic hydrocarbon polymer (b).

18. The interpolymer according to claim 12 wherein the vinyl aromatic hydrocarbon polymer (b) comprises 10 to 20 percent by weight of the total combined weight of the terminal polymer block (iii) of the block polymer (a) and the vinyl aromatic hydrocarbon polymer (b).

19. A polymeric composition comprising the interpolymer according to claims 12 to 18.

## Patentansprüche

1. Verfahren zur Herstellung eines Copolymeren, umfassend:
(a) Bildung einer Blockpolymer-Vorstufe in Gegenwart eines anionischen Initiators und eines Kohlenwasserstoff-Verdünnungsmittels in einer Reaktionszone, wobei die Blockpolymer-Vorstufe ein lebendes Ende hat und wobei die Struktur der Blockpolymer-Vorstufe durch die folgende Formel dargestellt wird:
S-B-
worin S ein Polymerblock ist, der in erster Linie Einheiten enthält, die von vinylaromatischem Kohlenwasserstoffmonomer beigesteuert werden, und B ein Polymerblock ist, der in erster Linie Einheiten enthält, die von konjugiertem Dienmonomer beigesteuert werden;
(b) Zusetzen zu der Blockpolymer-Vorstufe ein vinylaromatisches Kohlenwasserstoffmonomer und eine zusätzliche Menge an anionischem Initiator unter gleichzeitiger Bildung eines Copolymeren, das aus (1 einem Blockpolymer, das einen terminalen Poly(vinylaromatischen Kohlenwasserstoff)-Block an das lebende Ende der Blockpolymer-Vorstufe gebunden umfasst, und (2) einem Poly(vinylaromatischen Kohlenwasserstoff) mit einem lebenden Ende besteht und
(c) Inaktivieren der lebenden Enden und Isolieren des Copolymeren.

2. Verfahren nach Anspruch 1, wobei das vinylaromatische Kohlenwasserstoff-Monomer Styrol ist.

3. Verfahren nach Anspruch 1, wobei das konjugierte Dienmonomer 1,3-Butadien ist.

4. Verfahren nach Anspruch 1, wobei das vinylaromatische Kohlenwasserstoffmonomer, das zur Bildung des erstem Polymerblocks der Blockpolymer-Vorstufe in Stufe (a) verwendet wird, Styrol ist und das Verfahren in Gegenwart eines Styrol/Butadien-Diblock-Dispergiermittels durchgeführt wird.

5. Verfahren nach Anspruch 1, wobei der anionische Initiator eine Organolithiumverbindung ist.

6. Verfahren nach Anspruch 5, wobei die Organolithiumverbindung n-Butyllithium oder sec-Butyllithium ist.

7. Verfahren nach Anspruch 1, wobei die Menge an anionischem Initiator, die in Stufe (a) zugesetzt wird, 0,1 bis 5 Milliäquivalente Initiator pro 100 Gewichtsteile der Monomeren ist.

8. Verfahren nach Anspruch 1, wobei die zusätzliche Menge an Initiator, die in Stufe (b) zugesetzt wird, 0,01 bis 30 Milliäquivalente Initiator pro 100 Gewichtsteile der Monomeren ist.

9. Verfahren nach Anspruch 1, wobei die Menge an vinylaromatischem Kohlenwasserstoffmonomer, die in Stufe (b) zugesetzt wird, 6,3 bis 70,2%, bezogen auf das Gesamtgewicht des gebildeten Blockpolymers, ist.

10. Verfahren nach Anspruch 1, wobei die Stufe (c) zur Terminierung der lebenden Enden Zusetzen eines Katalysator-inaktivierenden Materials umfasst.

11. Verfahren nach Anspruch 10, wobei das Katalysator-inaktivierende Material aus der Gruppe bestehend aus Wasser, Alkohol, einer organischen Säure und einer anorganischen Säure ausgewählt wird.

12. Copolymer, erhältlich nach dem Verfahren nach Anspruch 1, bestehend aus:
(a) einem Blockpolymer, bestehend aus:
(ii) einem ersten Polymerblock, der in erster Linie Einheiten enthält, die von vinylaromatischem Kohlenwasserstoffmonomer beigesteuert werden,
(ii) einem zweiten Polymerblock, der in erster Linie Einheiten enthält, die von konjugiertem Dienmonomer beigesteuert werden,
(iii) einem terminalen Polymerblock, der Einheiten umfasst, die von vinylaromatischem Kohlenwasserstoffmonomer beigesteuert werden;
(b) einem vinylaromatischen Kohlenwasserstoff-Polymer, das aus Einheiten gebildet ist, die von vinylaromatischem Kohlenwasserstoffmonomer beigesteuert werden,
wobei das vinylaromatische Kohlenwasserstoffpolymer (b) gleichzeitig mit der Bildung des terminalen Polymerblocks (iii) des Blockpolymeren (a) produziert wird.

13. Copolymer nach Anspruch 12, wobei die Einheiten, die von vinylaromatischem Kohlenwasserstoffmonomer beigesteuert werden, Styrol sind.

14. Copolymer nach Anspruch 12, wobei das Blockpolymer (a) ein Styrol-Butadien-Styrol-Blockpolymer ist.

15. Copolymer nach Anspruch 12, wobei das Blockpolymer (a) ein mit einem Polystyrolblock terminiertes Blockpolymer ist.

16. Blockpolymer nach Anspruch 12, wobei das vinylaromatische Kohlenwasserstoff-Polymer (b) 5 bis 35 Gew.-% des kombinierten Gesamtgewichts des terminalen Polymerblocks (iii) des Blockpolymers (a) und des vinylaromatischen Kohlenwasserstoffpolymers (b) ausmacht.

17. Copolymer nach Anspruch 12, wobei das vinylaromatische Kohlenwasserstoffpolymer (b) 9 bis 26% des kombinierten Gesamtgewichts des terminalen Polymerblocks (iii) des Blockpolymeren (a) und des vinylaromatischen Kohlenwasserstoffpolymeren (b) ausmacht.

18. Copolymer nach Anspruch 12, wobei das vinylaromatische Kohlenwasserstoffpolymer (b) 10 bis 20 Gew.-% des kombinierten Gesamtgewichts des terminalen Polymerblocks (iii) des Blockpolymeren (a) und des vinylaromatischen Kohlenwasserstoff-Polymeren (b) ausmacht.

19. Polymerzusammensetzung, die das Copolymer nach den Ansprüchen 12 bis 18 umfasst.

## Revendications

1. Procédé pour la production d'un interpolymère, comprenant les étapes consistant :
(a) à former un précurseur polymère séquencé en présence d'un initiateur anionique et d'un diluant hydrocarboné dans une zone réactionnelle, ledit précurseur polymère séquencé ayant une extrémité vivante et la structure du précurseur polymère séquencé étant représentée par la formule suivante :
S-B-
dans laquelle S représente un bloc polymère contenant principalement des motifs fournis par un monomère hydrocarboné aromatique vinylique et B représente un bloc polymère contenant principalement des motifs fournis par un monomère diénique conjugué ;
(b) à ajouter audit précurseur polymère séquencé un monomère hydrocarboné aromatique vinylique et une quantité supplémentaire d'initiateur anionique, pour former simultanément un interpolymère consistant en : (1) un polymère séquencé comprenant un bloc terminal poly(monomère hydrocarboné aromatique vinylique) fixé à l'extrémité vivante dudit précurseur polymère séquencé, et (2) un poly(monomère hydrocarboné aromatique vinylique) ayant une extrémité vivante ; et
(c) à inactiver les extrémités vivantes et à recueillir l'interpolymère.

2. Procédé suivant la revendication 1, dans lequel ledit monomère hydrocarboné aromatique vinylique est le styrène.

3. Procédé suivant la revendication 1, dans lequel ledit monomère diénique conjugué est le 1,3-butadiène.

4. Procédé suivant la revendication 1, dans lequel le monomère hydrocarboné aromatique vinylique utilisé pour former le premier bloc polymère dudit précurseur polymère séquencé dans l'étape (a) est le styrène et le procédé est mis en oeuvre en présence d'un dispersant diséquencé styrène-butadiène.

5. Procédé suivant la revendication 1, dans lequel ledit initiateur anionique est un composé organique de lithium.

6. Procédé suivant la revendication 5, dans lequel le composé organique de lithium est le n-butyl-lithium ou le sec.-butyl-lithium.

7. Procédé suivant la revendication 1, dans lequel la quantité d'initiateur anionique ajoutée dans l'étape (a) est comprise dans l'intervalle de 0,1 à 5 milli-équivalents d'initiateur pour 100 parties en poids des monomères.

8. Procédé suivant la revendication 1, dans lequel la quantité supplémentaire d'initiateur ajoutée dans l'étape (b) est comprise dans l'intervalle de 0,01 à 30 milli-équivalents d'initiateur pour 100 parties en poids des monomères.

9. Procédé suivant la revendication 1, dans lequel la quantité de monomère hydrocarboné aromatique vinylique ajoutée dans l'étape (b) est comprise dans l'intervalle de 6,3 à 70,2 % sur la base du poids total du polymère séquencé formé.

10. Procédé suivant la revendication 1, dans lequel l'étape (c) de terminaison des extrémités vivantes comprend l'addition d'une matière inactivatrice de catalyseur.

11. Procédé suivant la revendication 10, dans lequel la matière inactivatrice de catalyseur est choisie dans le groupe consistant en l'eau, un alcool, un acide organique et un acide inorganique.

12. Interpolymère pouvant être obtenu par le procédé suivant la revendication 1, consistant en :
(a) un polymère séquencé consistant en :
(i) un premier bloc polymère contenant principalement des motifs fournis par un monomère hydrocarboné aromatique vinylique,
(ii) un second bloc polymère contenant principalement des motifs fournis par un monomère diénique conjugué,
(iii) un bloc polymère terminal comprenant des motifs fournis par un monomère hydrocarboné aromatique vinylique,
(b) un polymère hydrocarboné aromatique vinylique formé à partir de motifs fournis par un monomère hydrocarboné aromatique vinylique,
dans lequel ledit polymère hydrocarboné aromatique vinylique (b) est produit simultanément au cours de la formation du bloc polymère terminal (iii) du polymère séquencé (a).

13. Interpolymère suivant la revendication 12, dans lequel lesdits motifs fournis par un monomère hydrocarboné aromatique vinylique consistent en styrène.

14. Interpolymère suivant la revendication 12, dans lequel ledit polymère séquencé (a) est un polymère séquencé styrène-butadiène-styrène.

15. Interpolymère suivant la revendication 12, dans lequel le polymère séquencé (a) est un polymère séquencé terminé avec un bloc polystyrène.

16. Interpolymère suivant la revendication 12, dans lequel le polymère hydrocarboné aromatique vinylique (b) représente 5 à 35 % en poids des poids combinés totaux du bloc polymère terminal (iii) du bloc polymère (a) et du polymère hydrocarboné vinylique aromatique (b).

17. Interpolymère suivant la revendication 12, dans lequel le polymère hydrocarboné aromatique vinylique (b) représente 9 à 26 % en poids des poids combinés totaux du bloc polymère terminal (iii) du polymère séquencé (a) et du polymère hydrocarboné aromatique vinylique (b).

18. Interpolymère suivant la revendication 12, dans lequel le polymère hydrocarboné aromatique vinylique (b) représente 10 à 20 % en poids des poids combinés totaux du bloc polymère terminal (iii) du polymère séquencé (a) et du polymère hydrocarboné aromatique vinylique (b).

19. Composition polymère comprenant l'interpolymère suivant les revendications 12 à 18.
